# EUROPEAN PATENT SPECIFICATION

(11) **EP 2 357 292 B1**
(45) Date of publication and mention of the grant of the patent: **05.10.2016**
(21) Application number: 09830571.7
(22) Date of filing: 02.12.2009
(51) Int. Cl.: C08J 9/38, B29C 44/56, E04B 1/82, G10K 11/162, C08J 9/06

(54) **MANUFACTURING METHOD FOR ACOUSTIC FOAM**
HERSTELLUNGSVERFAHREN FÜR AKUSTIKSCHAUM
PROCEDE DE FABRICATION DE MOUSSE ISOLANTE

(30) Priority: 04.12.2008 KR 20080122466
(43) Date of publication of application: 17.08.2011
(73) Proprietor: LG Hausys, Ltd., Youngdungpo-gu Seoul 150-721 (KR)
(72) Inventor: KANG, Heon Sung, Cheongju-si Chungcheongbuk-do 361-758 (KR); PARK, Seong Chan, Cheongju-si Chungcheongbuk-do 361-775 (KR); JUNG, Myung Bong, Cheongju-si Chungcheongbuk-do 361-811 (KR); JANG, Moon Kyoung, Cheongju-si Chungcheongbuk-do 361-714 (KR); KIM, Seong Chan, Cheongju-si Chungcheongbuk-do 361-160 (KR); KIM, Jun Yup, Cheongju-si Chungcheongbuk-do 361-758 (KR); LEE, Chung Hwa, Gwangmyeong-si Gyeonggi-do 423-741 (KR); NAM, Jin Woo, Seoul 136-833 (KR)
(74) Representative: Plougmann Vingtoft a/s
(86) International application number: PCT/KR2009/007131
(87) International publication number: WO 2010/064833

(56) References cited:
- EP-A1- 1 820 818
- WO-A1-00/15697
- KR-A- 20080 018 030
- KR-A- 20080 064 765
- KR-B1- 100 404 768
- US-A- 3 196 975
- US-A- 3 459 274
- US-A1- 2005 221 075

## Description

### [Technical Field]

Embodiments of the invention relate to a method of manufacturing acoustic foam, and more particularly, to a method of manufacturing acoustic foam which exhibits excellent shock-absorption, mechanical strength, workability and heat insulation, and effectively absorbs, disperses and/or reduces noise and/or vibration generated by impact.

### [Background Art]

In public dwelling multi-story buildings such as townhouses, row house-type villas, buildings, apartments, schools, hospitals and dormitories, people dwell in upper and lower stories. Thus, any impact applied from an upper story and/or any noise generated by the impact causes serious inconvenience to people in a lower story. Such impact and noise is referred to as a floor impact sound, which means sound and shock generated by vibration of a slab caused by drop or movement of an object or footsteps.

US3196975 relates to acoustic panels for air-borne sound, where the face thereof has a tendency to be covered by grease or dirt. This document discloses in particular a polyurethane foam panel having both thermal insulation and acoustical insulation properties and having facing readily washable and repellent to the adherence of dirt thereon. The disclosure of this document is concerned with a air borne sound and the sound insulating panels are for different requirements as compared to acoustic foams considered herein.

A structure-borne sound generated in the above case is transferred to various positions with very small attenuation and thereby vibrates a surface of a structure, so that a floor impact sound is recognized as a directly reflected air-borne sound to people in a lower story.

Recently, interfloor noise caused by the floor impact sound is recognized as an important factor that determines the quality of dwelling environments. That is, while the consumer demand for comfortable dwelling environments continues to increase, materials used for floor structures of multi-story buildings are gradually becoming thinner and lighter, such that an interior noise source is increased.

As problems caused by the floor impact sound are highlighted as an important social issue, various studies to develop acoustic foam are underway such that the material is installed to a wall or floor of a multistory building to absorb, disperse and/or reduce impact and/or noise applied from an upper floor to a lower floor or a side.

### [Disclosure]

### [Technical Problem]

The present invention is conceived to solve the problems outlined above, and an object of the present invention is to provide a method of manufacturing acoustic foam which exhibits excellent shock-absorption, mechanical strength, workability and heat insulation, and effectively absorbs, disperses and/or reduces noise and/or vibration generated by impact.

### [Technical Solution]

In accordance with one aspect of the invention, a method of manufacturing acoustic foam comprising resin foam containing an open cell and a closed cell, the method includes physically blowing up the closed cell by applying physical impact to one or both sides of the acoustic foam in a contact or non-contact manner, wherein the physical impact is applied at a pressure of 1 to 5 kg/cm², and wherein the acoustic foam
has a volume percentage of open and closed cells of 80 % or more.

### [Advantageous Effect]

Acoustic foam manufactured by the method according to exemplary embodiments of the invention exhibits excellent shock-absorption, mechanical strength, workability and heat insulation, and effectively absorbs, disperses and/or reduces noise and/or vibrations generated by impact, thereby enhancing floor impact sound blocking.

### [Description of Drawings]

Fig. 1 is a scanning electron micrograph showing acoustic foam before a crushing process;
Fig. 2 is a scanning electron micrograph showing acoustic foam after a crushing process according to an exemplary embodiment of the present invention; and
Fig. 3 is a graph illustrating results of a hardness test of the acoustic foam after the crushing process according to the embodiment of the present invention.

### [Best Mode]

Exemplary embodiments of the invention will now be described in detail with reference to the accompanying drawings. The accompanying drawings are provided for illustration only and should not be construed as limiting the scope of the invention.

The present invention relates to a method of manufacturing acoustic foam including resin foam containing an open cell and a closed cell. The method includes physically blowing up the closed cell by applying impact to one or both sides of the acoustic foam in a contact or non-contact manner (hereinafter, referred to as a "crushing process").

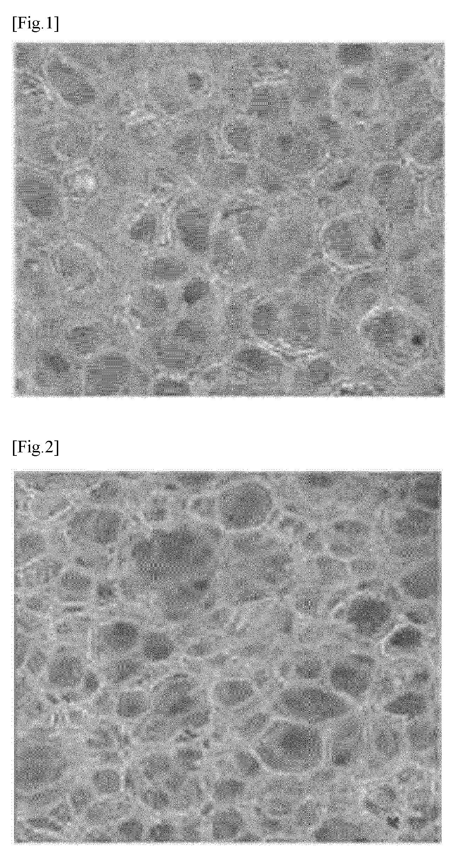

Herein, the term "open cell" means a cell contained in the foam and includes all kinds of cells at least partially opened. The term "volume percentage of open and closed cells" means a ratio of volumes occupied by open cells to volumes occupied by the entire cells of the foam. Fig. 1 illustrates a structure of an open cell 15 before a crushing process according to an exemplary embodiment. That is, the resin foam has a foam structure formed of open cells and closed cells.

The acoustic foam may become defective due to a closed cell, for example being contracted, and accordingly does not absorb load or impact, thus exhibiting inferior or non-uniform floor impact sound blocking.

According to the present invention, any type of resin foam known in the art may be used so long as the resin foam has properties of blocking floor impact sound.

Examples of the resin foam may include, stacked or bonded, at least one foam selected from the group consisting of polyurethane foam, polyurea foam, polyvinyl chloride foam, polypropylene foam, polyethylene foam, polystyrene foam, polyvinyl acetate foam, melamine resin foam, phenol resin foam, and foam of a derivative resin of at least one of the foregoing resins.

Although not specifically limited, polyurethane foam may be used in this invention since polyurethane provides excellent elasticity as an elastomer, allows a cell structure to be easily formed, and ensures excellent mechanical properties and impact sound blocking as compared to other materials.

The resin foam may be produced by any method known in the art depending on materials before the crushing process.

For example, the resin foam may be produced through a process of adding a foaming agent to a base resin to induce chemical foaming. Examples of the foaming agent include an organic foaming agent including sulfonyl hydrazides, such as p,p'-oxybis(benzenesulfonyl hydrazide), benzenesulfonyl hydrazide, or toluenesulfonyl hydrazide; azo compounds, such as azodicarbonamide (ADCA) or azobis-isophthalonitrile; and nitroso compounds, such as N,N'-dinitrosopentamethylene tetramine or N,N'-dimethyl-N,N'-dinitrosoterephthalamide; and an inorganic foaming agent including sodium bicarbonate or ammonium bicarbonate.

Next, a crushing process using the resin foam will be described in detail.

A process of applying physical impact to one or both sides of the acoustic foam including the resin foam may be performed by any one method selected from the group consisting of roll crushing, vacuum crushing, and pressure crushing or performed sequentially by at least two methods.

Here, in roll crushing, the acoustic foam is passed through a circular frame having an opening narrower than a thickness of the resin foam. In the vacuum crushing, the resin foam is subjected to vacuum. In the pressure crushing, pressure is applied to one or both sides of the resin foam.

In the crushing process, physical impact may be applied at a pressure of 0.05 to 10 kg/cm², preferably 1 to 5 kg/cm², without being limited thereto.

When the pressure is less than this range, the volume percentage of open and closed cells is reduced. When the pressure exceeds this range, hardness and/or insulation of the resin foam may considerably decrease.

Fig. 2 is a scanning electron micrograph showing acoustic foam after a crushing process according to an exemplary embodiment, showing an increase in volume percentage of open and closed cells.

After the crushing process, the volume percentage of open and closed cells is preferably 60% or more, more preferably 80% or more. In one embodiment, a maximum volume percentage of open and closed cells is 90%, without being limited thereto. As the volume percentage of open and closed cells of the resin foam increases, the material has further improved noise proofing. When the volume percentage of open and closed cells is less than 50%, desired noise proofing cannot be secured.

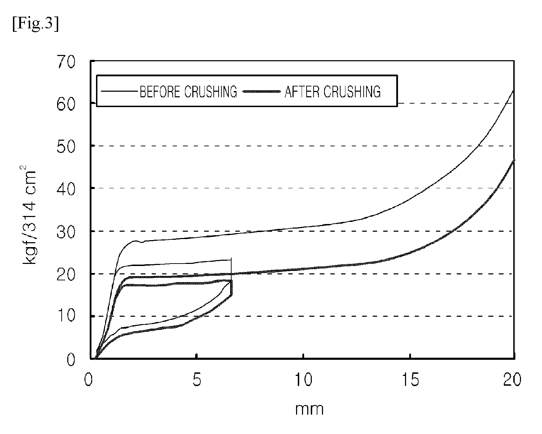

Fig. 3 is a graph to compare hardness of the acoustic foam before the crushing process (polyurethane foam) with hardness of the acoustic foam after the crushing process. In 25% hardness test of KSM6672 (soft urethane foam for cushioning), it can be ascertained that load deviation between cycle 1 and cycle 2 is considerably reduced after the crushing process, so that contraction of the resin foam may be minimized to increase floor impact sound blocking.

## Claims

1. A method of manufacturing acoustic foam comprising resin foam including an open cell and a closed cell, **characterized by** comprising: physically blowing up the closed cell by applying physical impact to one or both sides of the acoustic foam in a contact or non-contact manner, wherein the physical impact is applied at a pressure of 1 to 5 kg/cm², wherein the acoustic foam has a volume percentage of open and closed cells of 80% or more.

2. The method of claim 1, **characterized in that** the physical impact is applied by at least one method selected from the group consisting of roll crushing, vacuum crushing, and pressure crushing.

3. The method of claim 1, **characterized in that** the resin foam comprises, stacked or bonded, at least one foam selected from the group consisting of polyurethane foam, polyurea foam, polyvinyl chloride foam, polypropylene foam, polyethylene foam, polystyrene foam, polyvinyl acetate foam, melamine resin.

4. The method of claim 1, further comprising: forming the resin foam by adding a foaming agent to base resin to induce chemical foaming.

## Patentansprüche

1. Verfahren zur Herstellung von Akustikschaum, umfassend einen Harzschaumstoff mit einer offenen Zelle und einer geschlossenen Zelle, **dadurch gekennzeichnet, dass** er Folgendes umfasst: physikalisches Brechen der geschlossenen Zelle durch Anlegen eines physikalischen Stoß an einer oder beiden Seiten des Akustikschaums auf eine berührende oder berührungslose Weise, wobei der physikalische Stoß mit einem Druck von 1 bis 5 kg/cm² angelegt wird, wobei der Akustikschaum einen prozentualen Volumenanteil an offenen und geschlossenen Zellen von 80 % oder mehr aufweist.

2. Verfahren nach Anspruch 1, **dadurch gekennzeichnet, dass** der physikalische Stoß durch mindestens ein Verfahren angelegt wird, ausgewählt aus der Gruppe, bestehend aus Walzenbrechen, Vakuumbrechen und Druckbrechen.

3. Verfahren nach Anspruch 1, **dadurch gekennzeichnet, dass** der Harzschaumstoff, gestapelt oder gebunden, mindestens einen Schaumstoff umfasst, ausgewählt aus der Gruppe, bestehend aus Polyurethanschaumstoff, Polyharnstoffschaumstoff, Polyvinylchloridschaumstoff, Polypropylenschaumstoff, Polyethylenschaumstoff, Polystyrolschaumstoff, Polyvinylacetatschaumstoff, Melaminharz.

4. Verfahren nach Anspruch 1, weiterhin umfassend: Ausbilden des Harzschaumstoffs durch Hinzugeben eines Schäumungsmittels zu einem Grundharz, um ein chemisches Schäumen einzuleiten.

## Revendications

1. Procédé de fabrication de mousse acoustique comprenant une mousse de résine contenant une alvéole ouverte et une alvéole fermée, **caractérisé en ce qu'**il comprend : la rupture physique de l'alvéole fermée par application d'un impact physique sur une face ou les deux faces de la mousse acoustique par un processus avec ou sans contact, dans lequel l'impact physique est appliqué à une pression de 1 à 5 kg/cm², dans lequel la mousse acoustique présente un pourcentage volumique d'alvéoles ouvertes et fermées d'au moins 80 %.

2. Le procédé de la revendication 1, **caractérisé en ce que** l'impact physique est appliqué par au moins un procédé choisi dans le groupe consistant en : pressage au rouleau, pressage sous vide et pressage sous pression.

3. Le procédé de la revendication 1, **caractérisé en ce que** la mousse de résine comprend, empilée ou collée, au moins une mousse choisie dans le groupe consistant en : mousse de polyuréthane, mousse de polyurée, mousse de polychlorure de vinyle, mousse de polypropylène, mousse de polyéthylène, mousse de polystyrène, mousse d'acétate de polyvinyle, résine mélamine.

4. Le procédé de la revendication 1, comprenant également la mise en forme de la mousse de résine par ajout d'un agent moussant à la résine de base afin d'induire un moussage chimique.
